# EUROPEAN PATENT APPLICATION

(11) **EP 4 506 183 A1**
(43) Date of publication of application: **12.02.2025**
(21) Application number: 23382831.8
(22) Date of filing: 08.08.2023
(51) Int. Cl.: B42D 25/36, B42D 25/45, G06K 19/02, G06K 19/077

(54) **METHOD FOR MANUFACTURING A CARD-LIKE DATA CARRIER AND CARD-LIKE DATA CARRIER**

(71) Applicant: Giesecke+Devrient ePayments GmbH, 81677 München (DE)
(72) Inventor: Fernandez, Oscar, 81677 München (DE); Stahl, Jürgen, 81677 München (DE); Laplaza, Mireia, 81677 München (DE); Tarantino, Peter, 81677 München (DE)
(74) Representative: LKGLOBAL Lorenz & Kopf Patentanwalt Attorney at Law PartG mbB

(57) **Abstract**

The invention relates to a method for manufacturing a card-like data carrier (1). In a step (S10) of the method, a first card layer (10) is provided. In another step (S20), a second card layer (20) comprising a wooden or cellulose material is provided. In another step (S30), the second card layer (20) is bonded to the first card layer (10). In another step (S40), a treatment is applied on a surface (22) of the wooden or cellulose material of the second card layer (20) in order to modify a structure of the surface (22) of the wooden or cellulose material of the second card layer (20). The invention also relates to a card-like data carrier (1).

## Description

### Technical Field

The disclosure generally relates to an improved manufacturing of data carrier cards comprising wooden or cellulose material. In particular, the invention relates to a method for manufacturing a card-like data carrier as well as a corresponding card-like data carrier.

### Technical Background

Data carrier cards are used in various different applications. For example, bank cards like credit cards are used as payment cards which allow a user of the bank card to pay for purchased goods or services. Such data carrier cards are often manufactured in a standardized format and usually include different layers of plastic materials which are bonded to each other to provide a stack of layers. For example, the layers may be manufactured from polyvinylchloride (PVC), polyethylene terephthalate (PET), etc. Some data carrier cards also comprise a metallic material layer in order to provide a metallic effect to the card. However, known manufacturing techniques for plastic or metallic cards might not be suitable for the manufacturing of cards comprising a wooden material. In particular, a surface quality of a wooden material may be different to a surface quality of a plastic material or metallic material such that difficulties may arise when trying to equip the wooden or cellulose material of the card with card components like chip module, etc.

### Summary

It may be seen as an object of the invention to facilitate the manufacturing of a card-like data carrier comprising a wooden or cellulose material.

A method and a card-like data carrier according to the features of the independent claims are provided. Further embodiments are evident from the dependent claims and from the following description.

According to an aspect, a method for manufacturing a card-like data carrier is provided. A step of the method comprises providing a first card layer. Another step comprises providing a second card layer comprising a wooden material or a cellulose material. Another step comprises bonding the second card layer to the first card layer. Another step comprises applying a treatment on a surface of the wooden or cellulose material of the second card layer in order to modify a structure of the surface of the wooden or cellulose material of the second card layer. The method steps may be performed in the indicated order.

The inventive method facilitates the manufacturing of a wooden-containing or cellulose-containing card-like data carrier by preparing a wooden card surface or cellulose card surface for an attachment or bonding of various components, like for example security elements, chip modules, graphical elements or personalization elements. In particular, the inventive method provides the possibility to equip the card-like data carrier more easily with required components although being at least partially made of a wooden or cellulose material. Since the wooden or cellulose material may have different material properties when compared to conventional plastic or metallic materials, the surface of the wooden or cellulose material may require a specified surface treatment before components like a security element is attached, e.g., bonded, to the surface of the wooden or cellulose material. The inventive method thus provides a method in which the structure of the surface of the wooden or cellulose material can be suitably modified in order to facilitate the attachment or bonding of the respective element to the wooden or cellulose card surface. A treatment to modify the structure of the surface of the wooden material may also increase the bonding strength between the wooden or cellulose card surface and the components, like for instance security elements, to be bonded thereto.

In addition, the method provides the possibility to enhance the optical appearance of the card surface by providing the structurally modified surface of the wooden or cellulose card layer. In particular, a certain wood or cellulose pattern can be formed on the surface of the wooden or cellulose card layer such that a haptic surface can be generated which a user can feel when touching the wooden or cellulose card surface. This may further improve the optical appearance of the wooden or cellulose card surface for the user.

Not least, the usage of wood or cellulose as a renewable resource for the manufacturing of card-like data carriers also increases the sustainability of the card manufacturing process. That is, the usage of wooden or cellulose materials reduces the usage of plastic materials and or other materials which may be difficult to recycle.

For example, the second card layer can comprise a cellulose material and a binder material. In particular, the second card layer can comprise or consist of cellulose and glue. It is thus possible that the second card layer comprises cellulose and adhesives. The second card layer may also comprise a bamboo or paper layer.

In an example, the second card layer may represent a layer of cellulose combined with a binder, and the first card layer may represent a wooden material layer. In other words, the wooden card-like data carrier may have a top layer which may be made of cellulose and binder material. The wooden layer or layers may be arranged beneath this top cellulose and binder material layer. Therefore, the treatment on the surface of the wooden or cellulose material of the second card layer may comprise a treatment of the cellulose and binder material.

In another example, the second card layer represents a wooden material layer, and the first card layer represents another wooden material layer. In other words, the wooden card-like data carrier may have a top layer which may be made of wooden material. One or more further wooden layers may be arranged beneath this top wooden material layer. Therefore, the treatment on the surface of the wooden material of the second card layer may comprise a treatment of only a wooden material.

As indicated above, the method comprises a step of providing a first card layer. The first card layer may be a core layer to which the second card layer, i.e., the wooden or cellulose card layer, may be attached. For example, the first card layer may comprise a greater thickness when compared to the second card layer as the first card layer may form the base structure of the card-like data carrier to be manufactured. In particular, the first card layer may comprise circuitry components, antenna elements, wired connections, an interface module for contactless communication, etc. These components and elements may be embedded within the first card layer. However, it is possible that one or more of these components and elements may also extend, at least partially, into the second card layer.

The card-like data carrier which can be manufactured with the inventive method may comprise an ID-1 format, however, may also comprise other formats as well. The card-like data carrier can be chip-card, a payment card, a smart card or an identification card. In particular, the card-like data carrier can be a debit card or credit card.

The first card layer may comprise a plastic material and/or a metallic material. However, it is possible that the first card layer also comprises a wooden or cellulose material like the second card layer. The second card layer can be bonded to the first card layer, for example using a lamination process. The first card layer may constitute a structural base or core layer of the card-like data carrier to which other layers like the second card layer and/or a third card layer are attached, e.g., bonded. In particular, further layers of material may be bonded to a first surface of the first card layer and also to an opposite second surface of the first card layer. The result may be a stack of several material layers which together form the final card-like data carrier.

The method for manufacturing the card-like data carrier may thus comprise providing a third card layer comprising a wooden or cellulose material, bonding the third card layer to the first card layer, and applying a treatment on a surface of the wooden or cellulose material of the third card layer in order to modify a structure of the surface of the wooden or cellulose material of the third card layer. In other words, also a third card layer which, with respect to the first card layer, is arranged opposite to the second layer, may comprise a wooden or cellulose material surface which can be treated to modify a structure of the surface of the wooden or cellulose material of the third card layer. The treatment on the second and third card layers, for example providing a recessed structure or an indentation, may be carried out using any of the techniques that will be described in further detail below.

For example, the third card layer can comprise a cellulose material and a binder material. In particular, the third card layer can comprise or consist of cellulose and glue. It is thus possible that the third card layer comprises cellulose and adhesives. The third card layer may also comprise a bamboo or paper layer.

In an example, the third card layer may represent a layer of cellulose combined with a binder, and the first card layer may represent a wooden material layer. In other words, the wooden card-like data carrier may have a top layer which may be made of cellulose and binder material. The wooden layer or layers may be arranged beneath this top cellulose and binder material layer. Therefore, the treatment on the surface of the wooden or cellulose material of the third card layer may comprise a treatment of the cellulose and binder material.

In another example, the third card layer represents a wooden material layer, and the first card layer represents another wooden material layer. In other words, the wooden card-like data carrier may have a top layer which may be made of wooden material. One or more further wooden layers may be arranged beneath this top wooden material layer. Therefore, the treatment on the surface of the wooden material of the third card layer may comprise a treatment of only a wooden material.

More layers may be provided within the manufactured card-like data carrier. Although the following explanations mainly focus on explaining the manufacture of a card-like data carrier which has three card layers, it may be understood that more than three card layers, for example four card layers, five card layers, six card layers, etc. may be comprised by the manufactured card-like data carrier.

The inventive method may include a treatment of the surface or top layers, i.e., the above-mentioned second card layer and/or the opposite third card layer. However, it is possible that also layers beneath the surface or top layers may be treated in the same manner as the second and third card layers. For example, a recess or indentation can be introduced through the second card layer and into the (inner) first card layer or even into further inner card layers.

As indicated above, the second card layer comprises a wooden or cellulose material. The second card layer may at least partially comprise the wooden or cellulose material, wherein parts of the second layer may comprise other materials as well. In an example, the second card layer consists of the wooden or cellulose material, i.e., the second card layer is entirely made of wooden or cellulose material.

Applying a treatment on the surface of the wooden or cellulose material of the second card layer may include a shaping of the surface by means of a corresponding surface treatment device. The treatment may thus structurally change the wooden or cellulose surface by forming recesses, indentations or even protrusions at the surface. This leads to a modification of the surface behavior in terms of bonding capabilities, for example. Said treatment may include an intervention with the wooden or cellulose material which results in recesses and/or indentations extending into the wooden or cellulose material or even through the wooden or cellulose material. Such a treatment on the surface of the wooden or cellulose material of the second card layer which includes the structural modification of said surface may allow components like chip modules or security elements like holograms and/or personalization elements to be applied, e.g., bonded, to the wooden or cellulose material more easily.

The treatment may also comprise a variation of the structure of the wooden or cellulose material of the second card layer by changing the composition of the wooden or cellulose material, for example by applying a further material or compound to the surface of the wooden or cellulose material of the second card layer or by changing a surface energy of the wooden or cellulose material in the surface region. In the following, various techniques how such a treatment can be carried out in detail will be described.

According to an embodiment, applying the treatment on the surface of the wooden or cellulose material of the second card layer comprises forming a recessed structure in the surface of the wooden or cellulose material of the second card layer which represents an imitation of a wood structure or cellulose structure.

The imitation of a "real" wood or cellulose structure may improve the haptics of the card surface of the second card layer. For example, the manufacturing of the card-like data carrier may include a step in which the first card layer and the second card layer are pressed together. This pressing may be carried out while an increased temperature which is above the environmental temperature is applied. The layers may be pressed together between two lamination plates to bond the two layers. One or both of the lamination plates may include one or more protrusions in the form of stamps, for example in a patterned arrangement on the respective plate surface. During the pressing, these protrusions may form recesses in the wooden or cellulose surface of the second card layer. In this manner, it is possible to form recesses in the wooden or cellulose card surface which imitate a wooden or cellulose structure, thereby improving the haptics of the surface of the manufactured card-like data carrier.

According to an embodiment, applying the treatment on the surface of the wooden or cellulose material of the second card layer comprises forming an indentation in the surface of the wooden or cellulose material of the second card layer.

In an example, applying the treatment on the surface of the wooden or cellulose material of the second card layer comprises forming multiple indentations in the surface of the wooden or cellulose material of the second card layer. The multiple indentations may be formed at the surface in an irregular, regular or repeated pattern. The indentations may be formed into the surface using various manufacturing or treatment techniques which will be explained in more detail below.

According to an embodiment, applying the treatment on the surface of the wooden or cellulose material of the second card layer comprises providing an indentation into the wooden or cellulose material of the second card layer by pressing a stamping device against the surface of the wooden or cellulose material of the second card layer.

The stamping device may include two lamination plates which can be moved towards each other. During the manufacturing process, the first card layer, the second card layer, and possibly one or more further card layers, may be pressed together by the movement of the two lamination plates towards each other. One or both of the two lamination plates may include one or more stamps on their working surfaces so that, when pressing the lamination plate against the surface of the wooden or cellulose material of the second card layer, an indentation will be formed within the wooden or cellulose material. The indentation may substantially resemble the shape of the stamp of the lamination plate. The indentation may thus be in the form of an impression, a mark, an imprint or the like which is formed, at least up to a certain depth, into the wooden or cellulose material.

According to an embodiment, applying the treatment on the surface of the wooden or cellulose material of the second card layer comprises providing an indentation into the wooden or cellulose material of the second card layer by engraving the surface of the wooden or cellulose material of the second card layer using an engraving device.

The engraving device may comprise a cutting element which may penetrate the wooden or cellulose material of the second card layer, and which may be moved along the surface of the second card layer while penetrating the surface. In this manner, a recessed structure or pattern may be formed into the surface of the wooden or cellulose material of the second card layer. Grooves or channels may be formed in the surface of the wooden or cellulose material.

According to an embodiment, applying the treatment on the surface of the wooden or cellulose material of the second card layer comprises providing an indentation into the wooden or cellulose material of the second card layer by milling the surface of the wooden or cellulose material of the second card layer using a milling device.

The milling device may comprise a cutter, e.g., a rotary cutter, which removes wood or cellulose material from surface portions of the second card layer. In this manner, grooves or channels may be formed in the surface of the wooden or cellulose material.

According to an embodiment, applying the treatment on the surface of the wooden or cellulose material of the second card layer comprises providing an indentation into the wooden or cellulose material of the second card layer by applying a heat onto the surface of the wooden or cellulose material of the second card layer using a heat application device.

The heat may be applied by a heater or laser beam directed towards the surface of the wooden or cellulose material of the second card layer. By applying the heat onto the surface, parts of the wooden or cellulose material may be burnt at the surface of the second card layer. Also in this manner, it is possible to provide grooves or channels in the surface of the wooden or cellulose material.

According to an embodiment, the method further comprises inserting a security element into the indentation.

For example, the security element may be inserted into the indentation formed by any of the techniques described above. The security element may comprise a patch-like or block-like element which may be placed as an insert into the indentation. The security element may be attached to a carrier tape which is bonded to an internal surface of the indentation, i.e., to a surface located inside the indentation. Using the above-described techniques may prepare, e.g., smoothen or activate, the internal surface of the indentation such that the adhesion between the security element and the internal surface of the indentation is improved.

According to an embodiment, the security element is a hologram.

For example, a small indentation is formed at the surface of the wooden or cellulose material of the second card layer and the hologram is bonded to an internal surface of the indentation. The bonding may be carried out using an adhesive applied onto the internal surface of the indentation before placing the hologram thereon.

It is possible that the security element or hologram is attached onto the surface of the wooden or cellulose material of the second card layer without providing an indentation. In particular, the treatment of the surface of the wooden or cellulose material of the second card layer may comprise an activation of the surface, e.g., by changing an energy state of the surface, which also structurally modifies the surface of the wooden or cellulose material of the second card layer such that the hologram can be applied to the activated surface of the wooden or cellulose material. The activation of the surface before bonding the hologram thereto may enhance the adhesion between the hologram and the surface. It is possible that only the surface portion gets treated in which the hologram will be located, while other portions of the surface of the wooden or cellulose material may remain untreated.

According to an embodiment, inserting the security element into the indentation comprises inserting the security element into the indentation such that a surface of the security element is substantially aligned, e.g., lies flush, with at least a portion of the surface of the wooden or cellulose material of the second card layer.

In other words, the outer surface of the finished card-like data carrier may be substantially flat, since a transition region between a visible outer surface of the wooden or cellulose material of the second card layer may be flush with an outer surface of the security element. This may be achieved by adjusting an indentation depth to correspond to a thickness of the security element.

According to an embodiment, the method further comprises bonding the security element to an inner surface of the indentation using an adhesive.

The method may thus further comprise applying the adhesive onto at least a portion of the inner surface of the indentation and, afterwards, inserting the security element into the indentation to place the security element onto the adhesive.

According to an embodiment, applying the treatment on the surface of the wooden or cellulose material of the second card layer comprises modifying, e.g., increasing, a surface energy of the surface of the wooden or cellulose material of the second card layer using a plasma application device or a laser application device.

For example, a plasma beam or a laser beam is directed towards the surface of the wooden or cellulose material of the second card layer. A surface portion onto which the plasma beam or laser beam impinges may thus be structurally modified by a surface activation that changes an energy state of the treated surface portion. This may be applied to multiple portions on the surface of the wooden or cellulose material of the second card layer such that in these portions the attachment and bonding of components like a security element or a chip element may be facilitated. That is, the surface of the wooden or cellulose material of the second card layer may be treated with the plasma beam to increase the surface energy and, thus, increase the bonding force of the security element on the card layer surface.

According to an embodiment, the first card layer comprises an electronic circuit and/or an antenna element.

The antenna element may comprise an interface for contactless communication with an external device. The electronic circuit may comprise a memory on which data, for example personalized or user-specific information is stored. The electronic circuit and/or an antenna element may be embedded within the material of the first card layer. However, the electronic circuit and/or an antenna element may also extend at least partially into the wooden or cellulose material of the second card layer.

According to an aspect, the method as described herein is used to manufacture a chip-card, a payment card, a smart card or an identification card.

According to another aspect, a card-like data carrier is provided. Said card-like data carrier may be manufactured by the method as described herein. The card-like data carrier comprises a first card layer with an electronic circuit and/or an antenna element. The card-like data carrier further comprises a second card layer comprising a wooden or cellulose material. The second card layer is bonded to the first card layer and the second card layer comprises a structurally modified surface to which a security element, for example a hologram, is attached.

The modified surface may be a machined surface, a stamped surface, a heat-treated surface, a laser-treated surface or a plasma-treated surface.

### Brief description of the drawings

The present invention will hereinafter be described in conjunction with the following drawing figures, wherein like numerals denote like elements, and wherein:
- Fig. 1: shows a manufacturing of a card-like data carrier using a stamping device.
- Fig. 2: shows a manufacturing of a card-like data carrier using an engraving device or a milling device.
- Fig. 3: shows a manufacturing of a card-like data carrier using a heat application device, a plasma device or a laser device.
- Fig. 4: shows a surface of a wooden or cellulose material of a second card layer after a surface treatment.
- Fig. 5: shows a security element and an adhesive to be applied onto a surface of a wooden or cellulose material of a second card layer.
- Fig. 6: shows an example of manufacturing an indentation in a surface of a wooden or cellulose material of a second card layer.
- Fig. 7: shows another example of manufacturing an indentation in a surface of a wooden or cellulose material of a second card layer.
- Fig. 8: shows a card-like data carrier including a first card layer, a second card layer and a third card layer.
- Fig. 9: shows a flow diagram of a method for manufacturing a card-like data carrier.

### Detailed description of exemplary embodiments

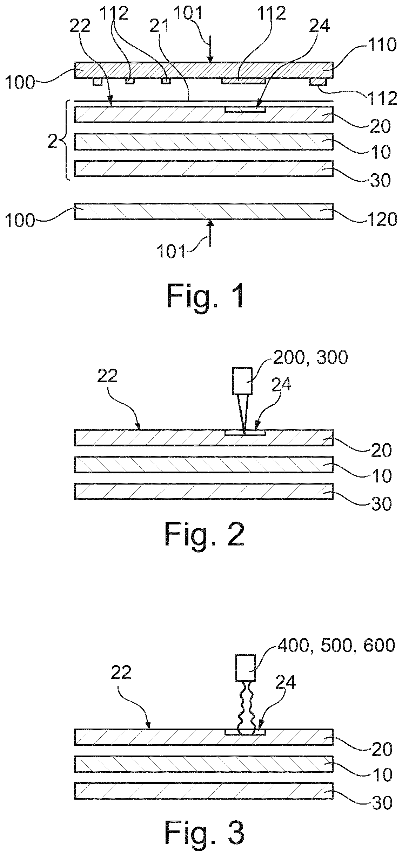

The representations and illustrations in the drawings may be schematic and not to scale. A better understanding of the method and the card-like data carrier described above may be obtained through a review of the shown illustrations together with a review of the detailed description that follows. Figures 1 to 3 and 5 to 8 may represent cross-sectional views or side views of the card layers shown therein.

Fig. 1 shows a manufacturing of a card-like data carrier using a stamping device 100. The stamping device 100 comprises a first stamping plate 110 and a second stamping plate 120, herein also be referred to as lamination plates 110, 120. Various card layers 10, 20, 30 may be arranged between the stamping plates 110, 120 before moving the stamping plates 110, 120 towards each other in order to press the stamping plates 110, 120 against respective surfaces of the outer card layers 10 and 30. In the example shown in Fig. 1, three card layers 10, 20, 30 are provided.

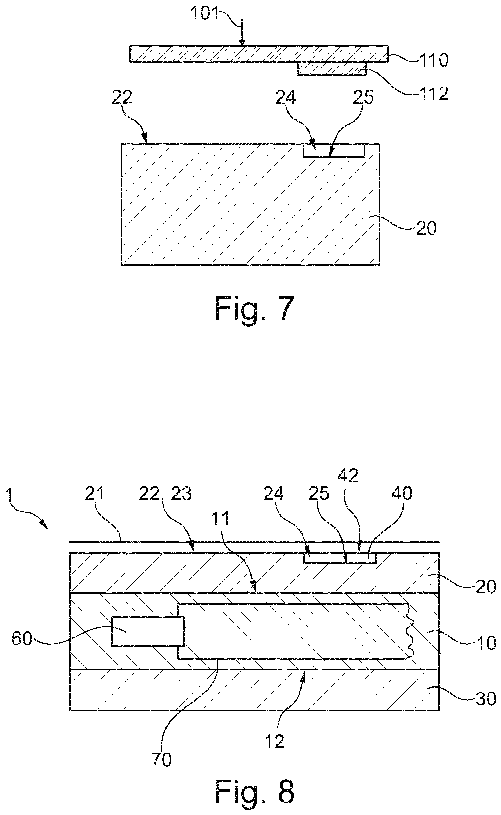

A first card layer 10 may represent the core or base layer of the card-like data carrier to be manufactured. The first card layer 10 may have a first surface and an opposite second surface. A second card layer 20 may be pressed against the first surface of the first card layer and a third card layer 30 may be pressed against the second surface of the first card layer when the stamping plates 110, 120 are moved towards each other. The movement direction and/or force direction of the stamping plates 110, 120 for this pressing step is shown by arrows 101 in Fig. 1. After the pressing step, the first card layer 10, the second card layer 20 and the third card layer 30 may define a laminated layer stack 2 which represents the card-like data carrier. At least the second card layer 20 may comprise or consist of a wooden or cellulose material. The first card layer 10 and/or the third card layer 30 may also comprise or consist of a wooden or cellulose material. An exemplary configuration of the card-like data carrier to be manufactured will be explained with respect to Fig. 8 below.

As can be seen in Fig. 1, the first stamping plate 110 comprises several protrusions 112, e.g., stamps 112, which protrude outwardly from an otherwise flat working surface of the first stamping plate 110. When moving the stamping plates 110, 120 towards each other and pressing them against the second card layer 20 and the third card layer 30, respectively, the protrusions 112 on the first stamping plate 110 will penetrate the surface 22 of the wooden or cellulose material of the second card layer 20. In particular, the protrusions 112 on the first stamping plate 110 will generate corresponding indentations within the surface 22 of the wooden or cellulose material of the second card layer 20, wherein one indentation 24 is exemplarily shown.

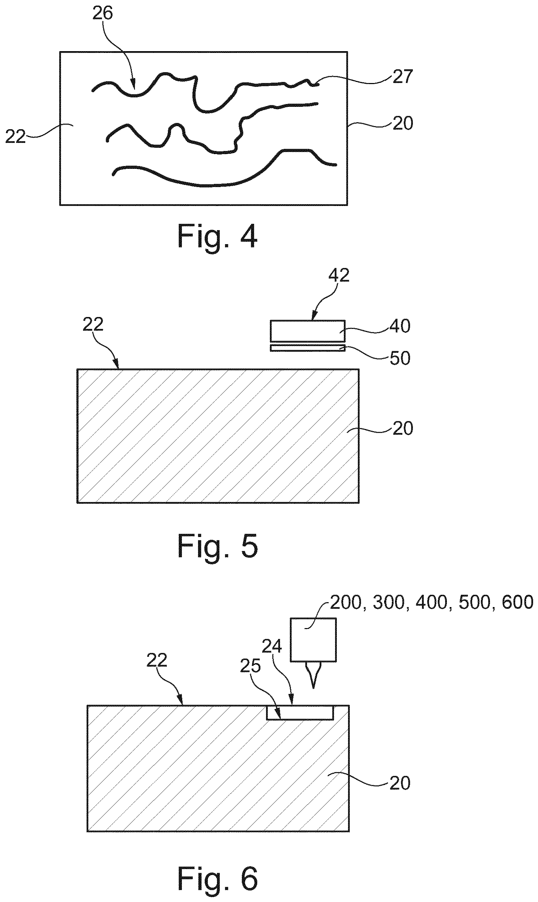

The indentation 24 may substantially have the shape of the corresponding protrusion 112 which has penetrated the wooden material surface 22 or cellulose material surface 22. A plurality of protrusions 112 on the first stamping plate 110 will generate several corresponding indentations within the surface 22 of the wooden or cellulose material of the second card layer 20. As a consequence of this stamping process using the first stamping plate 110, the surface 22 of the second card layer 20 may be provided with a pattern of indentations which together may form a recessed structure 26 (cf. Fig. 4), wherein the recessed structure 26 is defined by multiple grooves 27 or channels 27 extending in and along the wooden or cellulose material surface 22 of the second card layer 20. In this manner, a recessed structure 26 may be formed in the surface 22 of the wooden or cellulose material of the second card layer 20 which imitates a (real) wood or cellulose structure. Therefore, the manufactured card-like data carrier provides a wooden optical appearance or a cellulose-like appearance to a user viewing the card-like data carrier.

In addition, it may be possible that the surface 22 of the wooden or cellulose material of the second card layer 20 is not covered with any further cover layer such that the user of the card-like data carrier can also feel the grooves 27 or channels 27 extending in and along the wooden or cellulose material surface 22 of the second card layer 20. In other words, the card-like data carrier provides an improved haptics to the user when handling the card-like data carrier.

The described stamping process may be part of a surface treatment provided on the surface 22 of the wooden or cellulose material of the second card layer 20 in which the surface structure and, thus, the material property of the wooden or cellulose material surface 22 is modified.

Although not shown in Fig. 1, the second stamping plate 120 may also comprise one or more protrusions 112, e.g., stamps 112, which protrude outwardly from an otherwise flat working surface of the second stamping plate 120. In this manner, both sides of the card-like data carrier may be provided with indentations 24 and/or a recessed structure 26 as described above. For example, the third card layer 30 also comprises a wooden or cellulose material surface into which indentations 24 and/or a recessed structure 26 may be formed.

In an example, a cover layer 21, for example a transparent overlay, a coating, a varnish, or a lacquer, may be applied to the wooden or cellulose material surface 22 after all components have been attached to the wooden or cellulose material surface 22 and into the indentation 24.

Fig. 2 shows a manufacturing of a card-like data carrier using an engraving device 200 or a milling device 300. During this manufacturing, the surface 22 of the wooden or cellulose material of the second card layer 20 is treated by means of the engraving device 200 or the milling device 300. A cutter may penetrate the surface 22 and is moved parallel to the surface 22 while penetrating the surface 22 such that the indentation 24 or the recessed structure 26 (cf. Fig. 4) is generated.

It is possible that the layers 10, 20, 30 are pressed together in a separate lamination or stamping process which is performed before or after engraving/milling the surface 22 of the wooden or cellulose material of the second card layer 20. Preferably, the lamination or pressing of the layers 10, 20, 30 is performed before engraving/milling the surface 22. Furthermore, although not shown in Fig. 2, the engraving/milling may also be carried out on an outer surface of the third card layer 30. In this manner, both sides of the card-like data carrier may be provided with indentations 24 and/or a recessed structure 26.

Fig. 3 shows a manufacturing of a card-like data carrier using a heat application device 400, a plasma device 500 or a laser device 600.

In case of using a heat application device 400 for manufacturing the card-like data carrier, a heat radiation or heat flux may be directed towards the surface 22 in order to modify the wooden or cellulose structure of the surface 22, at least in the heated area. In an example, the wooden or cellulose material may be burnt in a region where the indentation 24 is to be provided. In other words, the indentation 24 may be burnt into the surface 22.

In case of using a plasma device 500 for manufacturing the card-like data carrier, a plasma beam may be directed towards the surface 22 in order to modify the wooden or cellulose structure of the surface 22, at least in the area where the plasma beam is present. In an example, the wooden or cellulose material may be activated by the plasma beam such that an energy state in the activated area of the surface 22 changes. This activation may allow an improved attachment, e.g., bonding, of a further component, like a security element, to the surface 22 in the activated area.

In case of using a laser device 600 for manufacturing the card-like data carrier, a laser beam or a laser pulse radiation may be directed towards the surface 22 in order to modify the wooden or cellulose structure of the surface 22, at least in the area where the laser beam is present. The laser beam can be used to at least partially burn the wooden or cellulose material in a region where the indentation 24 is to be provided. However, the laser beam may also activate, e.g., roughen or smoothen, one or more areas of the surface 22 in order to prepare said areas for attaching, e.g., bonding, a further component, like a security element, to the surface 22 in these areas.

Fig. 4 shows a surface 22 of a wooden or cellulose material of a second card layer 20 after a surface treatment. In particular, Fig. 4 shows an after-treatment condition of the surface 22 of the wooden or cellulose material of the second card layer 20 as described above. One of the above-described techniques, e.g., the stamping process of Fig. 1, the engraving or milling process of Fig. 2 or the heat/laser/plasma application of Fig. 3, may have been used to achieve the recessed structure 26 in the wooden or cellulose material surface 22 of the second card layer 20 as shown in Fig. 4.

As can be seen, the recessed structure 26 comprises an irregular arrangement of grooves 27 or channels 27 extending along and within the surface 22. The grooves 27 or channels 27 may represent an imitation of a real wood structure or a real cellulose structure, which would appear to a user when viewing a cross section of a tree trunk for example. This imitation may encompass a visual imitation of a wood or cellulose structure and a haptic imitation of a wood or cellulose structure since, besides the visual appearance of the recessed structure 26, the recessed structure 26 may also be perceived by a user when touching the surface 22 of the second card layer 20.

Fig. 5 shows an arrangement of a security element 40 and an adhesive 50 to be applied onto a surface 22 of a wooden or cellulose material of a second card layer 20. The adhesive 50 which may be present in the form of an adhesive layer 50 may be applied to the security element 40 before attaching the security element 40 together with the applied adhesive 50 to the surface 22 of the wooden or cellulose material of a second card layer 20. Alternatively, the adhesive 50 may first be applied to the surface 22, and the security element 40 is placed onto the adhesive 50 afterwards.

In another example, a carrier tape may be used to which the security element 40 is bonded via a heat activatable adhesive 50. The security element 40 may then be bonded to the surface 22 surface under heat and/or pressure. In order to achieve a flat surface for an optimal bonding result, the surface 22 of the second card layer 20 can be mechanically or thermally removed until the surface 22 becomes flat and smooth. This removal may for instance be carried out using a laser device 600 or a milling device 200 (cf. explanation with respect to Figs. 2 and 3 above). An upper or outer surface 42 of the security element 40 may face away from the surface 22 of the wooden or cellulose material of the second card layer 20 when the security element 40 is bonded to the surface 22.

Fig. 6 shows an example of manufacturing an indentation 24 at a surface 22 of a wooden or cellulose material of a second card layer 20. In particular, the indentation 24 may be provided using at least one of an engraving device 200, a milling device 300, a heat application device 400, a plasma device 500 or a laser device 600. With regard to the specific treatment procedure, reference is made to the explanations above which explain the different treatment procedures in detail.

The manufacturing of the indentation 24 at the surface 22 may include the manufacturing of an internal surface 25 of the indentation 24 which may be substantially parallel to the outer wooden or cellulose material surface 22 of the second card layer 20. In particular, the internal surface 25 of the indentation 24 may represent a recessed surface 25 inside the indentation 24 which provides a surface for receiving the security element 40 shown in Fig. 4, for example. Thus, when inserting the security element 40 into the indentation 24, the outer surface 42 of the security element 40 may be substantially aligned with the surface 22 of the wooden or cellulose material of the second card layer 22, such that the outer surface 42 of the security element 40 is flush with the surface 22 of the second card layer 20. The card-like data carrier may thus be manufactured such that a smooth outer surface of the card-like data carrier can be provided, at least in the transition region between the wooden or cellulose outer surface 22 of the second card layer 20 and the outer surface 42 of the security element 40. It is thus possible that the entire visible surface of the card-like data carrier has a flat or smooth appearance and that, possibly, only some portions of the wooden or cellulose surface 22 have a recessed structure 26 as shown in Fig. 4.

Fig. 7 shows another example of manufacturing the indentation 24 at the surface 22 of the wooden or cellulose material of a second card layer 20. In this example, the indentation 24 is provided using a protrusion 112, e.g., a stamp 112, provided on an otherwise flat working surface of the first stamping plate 110. The protrusion 112 may be a metal plate on the working surface of the first stamping plate 110.

The first stamping plate 110 may be part of a stamping device, for example of the stamping device 100 as described with respect to Fig. 1 above. The protrusion 112 may have a cuboid shape and/or may substantially match the shape and size of the security element 40 (not shown) to be placed in the indentation 24. A substantially flat and smooth internal surface 25 of the indentation 24 may be formed by means of the protrusion 112, which facilities the bonding of the security element 40 (not shown) to the internal surface 25 and thus within the indentation 24.

Fig. 8 shows a card-like data carrier 1 including a first card layer 10, a second card layer 20 and a third card layer 30. The card-like data carrier 1 may be a card-like data carrier 1 which has been manufactured using at least one of the methods, processes and techniques described above. The card-like data carrier 1 comprises a first card layer 10 with an electronic circuit 60 and an antenna element 70. In the example shown in Fig. 8, the electronic circuit 60 and the antenna element 70 are both embedded within the first card layer 10. The antenna element 70 may be configured for a contactless communication with an external device (not shown in Fig. 8).

The card-like data carrier 1 further comprises a second card layer 20 which includes a wooden or cellulose material, wherein the second card layer 20 is bonded to a first surface 11 of the first card layer 10. The card-like data carrier 1 further comprises a third card layer 30 which includes a wooden or cellulose material, wherein the third card layer 30 is bonded to a second surface 12 of the first card layer 10. That is, the second card layer 20 and the third card layer 30 are arranged on opposite sides of the first card layer 10.

The second card layer 20 comprises a structurally modified surface 23 to which a security element 40 is attached. The structurally modified surface 23 may be provided by a treatment of the surface 22 of the wooden or cellulose material of the second card layer 20. The structurally modified surface 23 may include a recessed structure 26 as shown in Fig. 4 above. As can be derived from Fig. 8, the structurally modified surface 23 may also include an indentation 24 which has been provided using a stamping device 100 (cf. Fig. 1), an engraving device 200 (cf. Fig. 2), a milling device 300 (cf. Fig. 2), a heat application device 400 (cf. Fig. 3), a plasma device 500 (cf. Fig. 3), a laser device 600 (cf. Fig. 3), or using a combination of any of these devices.

The indentation 24 has the shape of a recessed portion or cavity in the surface 22. A security element 40, e.g., a hologram, is arranged inside the indentation 24, in particular on an internal surface 25 of the indentation 24. An upper or outer surface 42 of the security element 40 may be aligned or lies flush with the surface 22 such that a smooth transition between the security element 40 and the surface 22 can be provided.

In the example shown in Fig. 8, a cover layer 21, for example a transparent overlay, a coating, a varnish, or a lacquer, may be provided for additional protection of the wooden or cellulose material surface 22 and the outer surface 42 of the security element 40. For illustrational purposes, the cover layer 21 is shown as being separated from the wooden or cellulose material surface 22 and the outer surface 42 of the security element 40. It is understood that the cover layer 21 can be directly attached to these surfaces 22, 42.

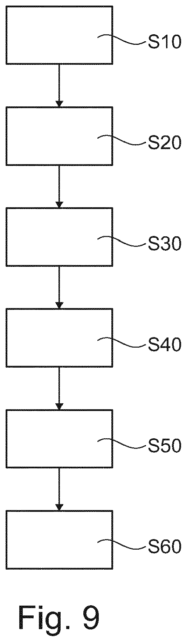

Fig. 9 shows a flow diagram of a method for manufacturing a card-like data carrier, for example for manufacturing the card-like data carrier 1 described with respect to Fig. 8. In a step S10 of the method, a first card layer 10 is provided. In another step S20, a second card layer 20 comprising a wooden or cellulose material is provided. In another step S30, the second card layer 20 is bonded to the first card layer 10. In another step S40, a treatment is applied to a surface 22 of the wooden or cellulose material of the second card layer 20 in order to modify a structure of the surface 22 of the wooden or cellulose material of the second card layer 20.

In another step S50, a security element 40 may be inserted into an indentation 24, wherein the indentation 24 may be provided as a result of said treatment of the surface 22 of the wooden or cellulose material of the second card layer 20. In another step S60, the security element 40 may be bonded to an inner surface 25 of the indentation 24 using an adhesive 50. The method steps may be performed in the indicated order.

## Claims

1. A method for manufacturing a card-like data carrier (1), comprising:
providing a first card layer (10, S10);
providing a second card layer (20) comprising a wooden or cellulose material (S20);
bonding the second card layer (20) to the first card layer (10, S30);
applying a treatment on a surface (22) of the wooden or cellulose material of the second card layer (20) in order to modify a structure of the surface (22) of the wooden or cellulose material of the second card layer (20, S40).

2. The method according to claim 1,
wherein applying the treatment on the surface (22) of the wooden or cellulose material of the second card layer (20) comprises forming a recessed structure (26) in the surface (22) of the wooden or cellulose material of the second card layer (20) which represents an imitation of a wood structure.

3. The method according any one of the preceding claims,
wherein applying the treatment on the surface (22) of the wooden or cellulose material of the second card layer (20) comprises forming an indentation (24) in the surface (22) of the wooden or cellulose material of the second card layer (20).

4. The method according any one of the preceding claims,
wherein applying the treatment on the surface (22) of the wooden or cellulose material of the second card layer (20) comprises providing an indentation (24) into the wooden or cellulose material of the second card layer (20) by pressing a stamping device (100) against the surface (22) of the wooden or cellulose material of the second card layer (20).

5. The method according any one of the preceding claims,
wherein applying the treatment on the surface (22) of the wooden or cellulose material of the second card layer (20) comprises providing an indentation (24) into the wooden or cellulose material of the second card layer (20) by engraving the surface (22) of the wooden or cellulose material of the second card layer (20) using an engraving device (200).

6. The method according any one of the preceding claims,
wherein applying the treatment on the surface (22) of the wooden or cellulose material of the second card layer (20) comprises providing an indentation (24) into the wooden or cellulose material of the second card layer (20) by milling the surface (22) of the wooden or cellulose material of the second card layer (20) using a milling device (300).

7. The method according any one of the preceding claims,
wherein applying the treatment on the surface (22) of the wooden or cellulose material of the second card layer (20) comprises providing an indentation (24) into the wooden or cellulose material of the second card layer (20) by applying a heat onto the surface (22) of the wooden or cellulose material of the second card layer (20) using a heat application device (400).

8. The method according to any one of claims 3 to 7, comprising:
inserting a security element (40) into the indentation (24, S50).

9. The method according to claim 8,
wherein the security element (40) is a hologram.

10. The method according any one of claims 8 to 9,
wherein inserting the security element (40) into the indentation (24) comprises inserting the security element (40) into the indentation (24) such that a surface (42) of the security element (40) is substantially aligned with at least a portion of the surface (22) of the wooden or cellulose material of the second card layer (22).

11. The method according any one of claims 8 to 10, comprising:
bonding the security element (40) to an inner surface (25) of the indentation (24) using an adhesive (50, S60).

12. The method according any one of the preceding claims,
wherein applying the treatment on the surface (22) of the wooden or cellulose material of the second card layer (20) comprises modifying a surface energy of the surface (22) of the wooden or cellulose material of the second card layer (20) using a plasma device (500) or a laser device (600).

13. The method according any one of the preceding claims,
wherein the first card layer (10) comprises an electronic circuit (60) and/or an antenna element (70).

14. Use of a method according to any one of the preceding claims for manufacturing a chip-card, a payment card, a smart card or an identification card.

15. A card-like data carrier (1), comprising:
a first card layer (10) with an electronic circuit (60) and/or an antenna element (70);
a second card layer (20) comprising a wooden or cellulose material;
wherein the second card layer (20) is bonded to the first card layer (10);
wherein the second card layer (20) comprises a structurally modified surface (23) to which a security element (40) is attached.
